# EUROPÄISCHE PATENTANMELDUNG

(11) **EP 3 109 061 A1**
(43) Veröffentlichungstag der Anmeldung: **28.12.2016**
(21) Anmeldenummer: 16001425.4
(22) Anmeldetag: 24.06.2016
(51) Int. Cl.: B44D 3/16, C09J 7/02

(54) **FARBENTFERNER UND VERFAHREN ZUR MECHANISCHEN BESEITIGUNG VON FARBSCHICHTEN ODER INSTABIL HAFTENDEN FARBSTELLEN VON OBERFLÄCHEN**

(30) Priorität: 24.06.2015 CH 907152015
(71) Anmelder: Uzin Tyro AG, 6374 Buochs (CH)
(72) Erfinder: Gross, Bruno, CH-4142 Münchenstein (CH); Gross, Joel, CH-4051 Basel (CH)
(74) Vertreter: Spranger, Stephan

(57) **Zusammenfassung**

Die Erfindung betrifft einen Farbentfemer (1) zur im Prinzip mechanischen Beseitigung von Farbschichten oder instabil haftenden Farbstellen von Oberflächen besteht zunächst aus einem flächigen Träger (2) mit einer Trägeroberseite (20) und einer Trägerunterseite (21). Weiterer Bestandteil des Farbentfemers (1) ist zumindest eine auf der Trägeroberseite (20) aufgebrachte erste Klebschicht (3), welche zum Anhaften der von den Oberflächen zu beseitigenden Farbschichten oder instabil haftenden Farbstellen bestimmt ist. Schliesslich kann der Farbentfemer (1) einen ersten flächigen Belag (4) aufweisen mit einer Belagsfrontseite (40) und einer Belagsrückseite (41), wobei letztere zum lösbaren Überdecken der zumindest einen ersten Klebschicht (3) vor einer ersten Anwendung des Farbentferners (1) bestimmt ist. Die Erfindung betrifft ferner ein Verfahren zur Anwendung eines solchen Farbentferners.

## Beschreibung

Die Erfindung betrifft einen Farbentferner und ein Verfahren zur mechanischen Beseitigung von Farbschichten oder instabil haftenden Farbstellen von Oberflächen.

Für die Sanierung von gestrichenen Oberflächen, z.B. Decken, Wände, Türen, Balken, etc müssen alte Farbschichten, die zu wenig tragfähig sind bzw. instabil anhaften, vor dem Überlackieren entfernt werden. Ansonsten drohen Schäden am neuen Anstrich, wie z.B. Abblätterungen, Blasen, etc. Für eine gute Untergrundvorbereitung müssen alle Farbschichten, die ungenügend auf dem Untergrund haften, entfernt werden. Nur genügend tragfähige Farbschichten, deren Kohäsion und Adhäsion genügend hoch sind, können auf dem Untergrund verbleiben.

Für die Entfernung von Farb- und Lackschichten wurden bislang im Wesentlichen folgende mechanische und chemische Verfahren angewendet.

Die Farbschicht wird mit einer Fräsmaschine abgefräst. Bei diesem Verfahren wir die Farbschicht mit einer Fräsmaschine abgetragen, wobei trotz Absaugung viel Staub und Schmutz entsteht. Für die Arbeiten müssen zumindest Schutzbrille und Gehörschutz getragen werden. Für Arbeiten in der Höhe oder an der Decke müssen Podeste aufgebaut oder auf einer Leiter in kleinen Portionen unter periodischem Versatz der Leiter gearbeitet werden. Stromanschluss und ein Staubschutz für die restlichen Räumlichkeiten sind notwendig für diese Arbeiten. Die Arbeiten an einer Decke sind sehr anstrengend, da die Maschine (je nach Modell über 4 kg) über Kopf gehalten werden muss. Ferner wird der Untergrund massiv beschädigt und gegebenenfalls muss eine Gipsschicht vollständig neu aufgebaut werden, was Fremdarbeiten (Gipser) und weitere Trocknungszeiten beansprucht.

Die Farbschicht wird mit Schleifpapier und einer Schleifmaschine abgeschliffen. Bei diesem Verfahren wir die Farbschicht mit einer Schleifmaschine abgetragen, es entsteht trotz Absaugung noch mehr Staub und Schmutz als beim Abfräsen. Für die Arbeiten müssen zumindest Schutzbrille und Gehörschutz sowie gegebenenfalls auch weitere Schutzkleidung, wie etwa Staubschutzmasken und Kopfbedeckungen getragen werden. Für Arbeiten in der Höhe oder an der Decke müssen Podeste aufgebaut oder auf einer Leiter in kleinen Etappen unter periodischem Versatz der Leiter gearbeitet werden. Stromanschluss und ein Staubschutz für die restlichen Räumlichkeiten sind ebenso für diese Arbeiten notwendig. Die Arbeiten an einer Decke sind sehr anstrengend, da die Maschine (je nach Modell über 4 kg) auch dabei über Kopf gehalten werden muss. Es wird viel Schleifpapier verbraucht. Für 1 Quadratmeter Farbanstrich werden oftmals mehr als 3 Bogen Schleifpapier verbraucht was für einen kleinen Raum schnell über 50 Bogen Schleifpapier erfordert. Der Untergrund wird beschädigt, wenn auch nicht so stark wie beim Abfräsen. Die entstanden Schleifwellen müssen plan abgespachtelt werden, was Arbeitszeit, Material und weitere Trocknungszeiten beansprucht. Ferner ergibt sich beim Abschleifen ein hoher nachgelagerter Reinigungsaufwand.

Mit einer Spachtel oder ähnlichen Werkzeugen werden die Farbschichten abgestossen. Dabei wird z.B. ein Gipsuntergrund stark beschädigt und es entsteht viel Dreck. Dieses Verfahren ist äusserst Arbeitsintensiv. Selbstverständlich müssen auch hier die Schäden am Untergrund plan gespachtelt werden, was zusätzliche Arbeitszeit, Material und Trocknungszeiten beansprucht.

Für ein Ablaugen von Farbschichten werden Chemikalien, (Abbeizmittel) eingesetzt die nach unterschiedlichen chemischen Mechanismen funktionieren. Es gibt lösemittelbasierte, wässrig alkalische und wässrig oxidative Beizmittel und deren Kombinationen. Lösemittelhaltige Abbeizmittel bestehen aus Mischungen organischer Lösemittel, wie z.B. Methanol, Benzin, Terpentin oder Dichlormethan, sowie Tensiden und Verdickungsmitteln, wie Methylcellulose oder Paraffin. Diese Abbeizer sind besonders beim Einatmen und teilweise im Hautkontakt stark giftig. Sie sind umweltschädlich und bergen oft eine erhöhte Brandgefährdung. Es muss mit guter Belüftung und mit Hautschutz, Atemschutz und Augenschutz gearbeitet werden.

Alkalische Abbeizer oder Laugen sind sehr wirksam um ölhaltige Lacke, wie z. B. Öllacke oder Alkydharzlacke, zu entfernen. Diese enthalten z. B. Salmiakgeist oder Ätznatron bzw. Natronlauge. Diese Laugen sind äusserst aggressiv auf Haut, Augen, Schleimhäute und Lunge und müssen mit entsprechender Schutzkleidung, Atemschutz und Augenschutz gehandhabt werden.

Oxidative Abbeizer enthalten z.B. Wasserstoffperoxid welches die Lackschichten chemisch angreift. Diese Mittel sind auch sehr aggressiv gegenüber Haut, Augen und Schleimhäute und es muss mit entsprechender Schutzkleidung, Atemschutz und Augenschutz gearbeitet werden.

Bei all diesen Abbeiz- bzw. Ablaugeverfahren entstehen üble Gerüche, giftiger Abfall und Umweltbelastungen. Die Arbeiten sind sehr aufwändig und die Untergründe müssen nach dem Entfernen der Lackschicht gut neutralisiert werden, um Schäden am Untergrund und der neuen Lackschicht zu vermeiden:

Bei all den beschriebenen Methoden entstehen beträchtliche Mengen an Schmutz und Abfall, dessen Einsammlung und fachgerechte Entsorgung nicht immer einfach ist, da sich z.B. der Schleifstaub weiträumig verteilen kann.

Wenn giftige, schwermetallhaltige Anstriche entfernt werden müssen (z.B. Menninge) entstehen teilweise giftige Stäube, die problematisch für den Arbeits- und Umweltschutz sind. Diese müssen möglichst vollständig gesammelt und als Sondermüll enstorgt werden.

Die mechanische Farbentfemung ist in der Internationalen Patentklassifikation B44 D, 3/16 erfasst. Hier werden vorrangig Patentpublikationen zu Vorrichtungen und Geräten zum Entfernen von Farbschichten mittels Abwaschen, Bürsten, Kratzen, Schaben und Schleifen eingeordnet. Die DE 388 203 hat eine Drahtbürste mit einer Vielzahl von Blattfedern für das Beseitigen von Farbanstrichen zum Gegenstand. In der DE 453 349 wird eine Vorrichtung zum Anfeuchten und Abspachteln von Raumdecken beschrieben. Die DE 483 633 offenbart einen Apparat zum Entfernen alter Farbüberzüge auf Raumdecken und -wänden, der bewegliche Kratzmesser und eine Absaugvorrichtung umfasst. Gegenstand der DE 1 224 186 ist eine Vorrichtung zum Abwaschen von Farbanstrichen mittels einer Zuführung von Waschflüssigkeit und einer antreibbaren Bürste. Die DE 197 47 838 C2 betrifft eine Farbentferungsvorrichtung, basierend auf einem Strahlmittel, welches auf die zu behandelnde Oberfläche geschleudert und wieder zurück gefördert wird. In der DE 299 23 411 U1 wird ein Heissluftspachtel zum Entfernen von Farbschichten vorgestellt. Die DE 200 18 803 U1 bezieht sich auf ein Kratzeisen als Werkzeug zum Entfernen alter Farbschichten. Die DE 20 2004 012 777 U1 schliesslich betrifft ebenfalls eine Vorrichtung zum Abkratzen von Anhaftungsresten mit vorherigem Auftrag eines Lösungsmittels.

Chemische Anstrichentferner sind der Internationalen Patentklassifikation C09D, 9/00 zugeordnet. Auf die Referenzierung von Schrifttum zu verschiedenen Typen chemischer Mittel wird verzichtet, da der vorliegende erfinderische Farbentferner im Prinzip auf mechanischer Beseitigung beruht.

Angesichts der bisher verfügbaren Werkzeuge, Vorrichtungen und Mittel zur Farbentfemung von Raumdecken, -wänden und anderen Oberflächen mit deren Erfordernis erheblichen Arbeitszeit- und/oder Geräte- und/oder Materialaufwands, liegt der Erfindung die Aufgabe zugrunde, einen Farbentferner zur mechanischen Beseitigung von Farbschichten oder instabil haftenden Farbstellen von Oberflächen vorzuschlagen, der ein zeiteffizientes und gründliches Entfernen alter Farbschichten bei möglichst geringem Geräte- oder Materialeinsatz erlaubt. Ferner soll die Erfindung darauf orientieren, beim Farbentfemen im Prinzip jegliche Verschmutzung des Arbeitsumfelds zu vermeiden und allenfalls eine nur geringe Nachbearbeitung der behandelten Oberfläche zu erfordern. Es ist ferner die Aufgabe der Erfindung ein umweltfreundliches, arbeiterfreundliches, zeitsparendes Verfahren zu schaffen, um die zu lackierenden Untergründe durch Entfernung alter Farbschichten vorzubereiten. Mit diesem Verfahren soll weniger Verschmutzung entstehen und Arbeitszeit eingespart werden.

Der Farbentferner zur mechanischen Beseitigung von Farbschichten oder instabil haftenden Farbstellen von Oberflächen besteht erfindungsgemäß aus einem flächigen Träger mit einer Trägeroberseite und einer Trägerunterseite. Weiterer Bestandteil des Farbentfemers ist zumindest eine auf der Trägeroberseite aufgebrachte erste Klebschicht, welche zum Anhaften der von den Oberflächen zu beseitigenden Farbschichten oder instabil haftenden Farbstellen bestimmt ist. Schliesslich umfasst der Farbentferner einen ersten flächigen Belag mit einer Belagsfrontseite und einer Belagsrückseite, wobei letztere zum lösbaren Überdecken der zumindest einen ersten Klebschicht vor einer ersten Anwendung des Farbentferners bestimmt ist.

Der erfindungsgemäße Farbentferner weist also einen flächigen Träger bzw. eine Trägerschicht auf, wobei mindestens eine Seite der Trägerschicht mit einer ersten Klebschicht bzw. Haftkleberbeschichtung versehen ist. Die Haftkleberbeschichtung ist mit einem ersten flächigen Belag, bzw. einer ablösbaren Abdeckschicht versehen wobei die Abdeckschicht auch Bestandteil des Trägers sein kann.

Die nachfolgenden Merkmale beziehen sich auf spezielle Ausführungen der Erfindung:
Auf der Trägerunterseite kann eine zweite Klebschicht aufgebracht sein, welche vor einer zweiten Anwendung des Farbentferners von der Belagsrückseite eines lösbaren zweiten flächigen Belags überdeckt ist. Eine solche Ausführung kann insbesondere dann zum Einsatz kommen, wenn der erfindungsgemäße Farbentferner in flächiger oder plattenform vorliegt und nicht zu einer Rolle gerollt ist.

Zwecks Lösbarkeit von einer nur dezenten Anhaftung der Belagsrückseiten des Belags an den Klebschichten sind die Belagsrückseiten mit einer Trennbeschichtung versehen. Der Träger besteht bevorzugt aus einem flexiblen, im Prinzip reissfesten Material, insbesondere festem Papier, Folie oder Vlies. Der Belag besteht aus einem flexiblen Material, insbesondere Papier, Folie oder Vlies.

Der Farbentferner hat als Sandwichanordnung die Gestalt einer plattenförmigen Materialbahn oder einer Materialrolle. Die Materialbahn oder -rolle besteht aus einer Mehrzahl von zusammenhängenden Teilstücken. Zwischen den Teilstücken ist jeweils eine Markierung oder eine Perforation zum erleichterten Abteilen von Teilstücken vorhanden.

Zumindest am Beginn der Materialbahn oder -rolle weist der Belag einen Lösebereich zum erleichterten Abziehen des Belags von der Klebschicht auf. Unterhalb des Lösebereichs des Belags hat die Klebschicht eine Aussparung. Der Lösebereich ist z.B. als Randstreifen oder Eckareal beschaffen. Der Belag weist an jedem Teilstück zumindest einen Lösebereich mit darunter befindlicher Aussparung an der Klebschicht auf. Die Belagsfrontseite ist zum Anbringen von Produkthinweisen nutzbar. Die Klebschicht und optional auch der Träger sind verschiedenen Typen von zu beseitigenden Farbschichten oder instabil haftenden Farbstellen angepasst.

Ist kein separater Träger aus z.B. Papier, Folie oder Vlies vorgesehen, so kann man den Träger direkt aus dem Material an einer Unterseite der Klebschicht durch partiell aushärtende Behandlung erzeugen und dabei vorzugsweise die Flexibilität beibehalten, aber die Klebeigenschaft zumindest weitgehend vermindern.

Der Träger bzw. die Trägerschicht besteht bevorzugt aus einer Folie z.B. Kunststofffolie, einem Gewebe, einem Vlies, einem Papier, einem Gelege, einem Schaum oder eine Kombination davon. Die Trägerschicht kann mehrschichtig aufgebaut sein.

Für die Applikation soll der Farbentferner genügend dünn und anschmiegsam und gleichzeitig für die Entfernung genügend fest und stabil sein. Der erfindungsgemässe Farbentferner soll einerseits eine hohe Festigkeit aufweisen und sich andererseits in ausreichendem Masse der Untergrundstruktur anschmiegen können. Je nach Untergrundrauhigkeit wird eine mehr oder weniger hohe Anschmiegsamkeit vom erfindungsgemässen Farbentferners verlangt, wobei sich die Anschmiegsamkeit in etwa reziprok zur Biegesteifigkeit des erfindungsgemässen Farbentferners verhält. Dies gelingt indem ein genügend dünnes, steifes Material oder ein dickeres, elastisches Material für die Trägerschicht verwendet wird. Für die Applikation auf gewölbten, gebogenen, strukturierten oder profilierten Untergründen kann eine besonders anschmiegsame Version z.B, basierend auf einem Schaumträger, Gewebeträger oder einem elastischen Folienträger bevorzugt sein.

Für die vollflächige Applikation auf planen Untergründen können steifere, dünne Träger bevorzugt sein.

Falls für die Trägerschicht für den erfindungsgemässen Farbentferner ein Gewebe, Gelege oder Vlies eingesetzt oder mit eingesetzt wird, so besteht ein solches Gewebe, Gelege, Vlies oder Schaum bevorzugt aus der nicht abgeschlossenen Gruppe Polyethylen, Polypropylen, Polyamid (aliphatisch, aromatisch), Polyester (aliphatisch, aromatisch), Polyacrylesteramid, Polymethylmethacrylat, Polyimid, Polyethylenporpylen, Polyethylenterephthalat, Polylactid, Polyolefine, Polyvinylbutyral, Cellulose, Zellwolle, Viskose, Baumwolle, Glas, Karbon oder Copolymere oder Abmischungen oder Mischkonstruktionen davon.

Falls für die Trägerschicht für den erfindungsgemässen Farbentferner eine Folie oder ein Schaum eingesetzt wird oder mit eingesetzt wird, so besteht eine solche Folie oder Schaum bevorzugt aus einem Polymermaterial aus der nicht abgeschlossenen Gruppe Polyethylen, Polypropylen, Polyamid (aliphatisch, aromatisch), Polyester (aliphatisch, aromatisch), Polyethylenporpylen, Polyether, Polyurethan, Polyethylenterephthalat, Polylactid, Polyolefine, Polyvinylbutyral, Polybutadien, Neopren, Latex oder Polyvinylchlorid oder Copolymere bzw. Mischungen davon.

Bevorzugt kann der Farbentferner einen Träger aufweisen, welcher aus einem mehrschichtigen Aufbau besteht, welcher z.B aus Kombinationen aus oben genannten Gewebe, Vlies, Gelege, Schaum oder Folie aufgebaut ist. Der Träger bzw. die Trägerschicht kann einschichtig oder mehrschichtig aus gleichen oder unterschiedlichen Materialien aufgebaut sein.

Der Belag bzw. die Abdeckschicht kann aus einem Papier, einer Folie, einem Vlies, einem Schaum oder einem Gewebe bestehen. Diese kann mit einer haftungsmindernden Schicht z.B. einem Polysiloxan, ausgerüstet sein. In einer weiteren Ausführungsform besteht die Abdeckschicht selbst aus haftungsmindemdem Material, z.B. bevorzugt aus Polytetrafluorethylen. Die haftungsmindernde Schicht kann auch in Form einer Silikonbeschichtung der entsprechenden Oberfläche ausgebildet sein.

In einer bevorzugten Ausführung ist der Belag bzw. die Abdeckschicht Bestandteil der Trägerschicht.

Die Klebschicht zumindest auf der Trägeroberseite kann eine Haftkleberbeschichtung zumindest einer der Oberflächen des erfindungsgemässen Farbentferners sein.

Die erste und/oder zweite Klebschicht kann zweckmässig aus einem Haftklebermaterial bestehen, welches ausgewählt ist aus der nicht abgeschlossenen Gruppe bestehend aus Haftklebstoffen basierend auf Acrylat, Chloropren-Kautschuk, Polyurethan, Styrolacrylat, Vinylacetat, Vinylacetat-Ethylen und/oder deren Mischungen und/oder deren Copolymerisaten, in der Regel vorliegend als Dispersions-Klebstoff, lösemittelbasierter Klebstoff oder Schmelzklebstoff, rein physikalisch härtend und/oder chemisch und/oder physikalisch nachvemetzend ausgerüstet. Besonders bevorzugt sind nach momentanem Kenntnisstand der Anmelderin die Haftklebstoffe basierend auf Acrylat, Vinylacetat, Vinylacetat-Ethylen und/oder deren Mischungen und/oder deren Copolymerisate.

Der Haftstärke der Haftkleberbeschichtung kommt eine entscheidende Funktion zu. Diese muss genügend hoch für eine sichere Anhaftung der abzulösenden Farb- und Lackschichten sein und dabei nicht zu hoch ausfallen, um den gesunden Untergrund nicht zu stark zu belasten bzw. zu beschädigen.

Bei sachgemässem Aufbau der Farb- oder Lackschichten ist die Haftung zwischen den einzelnen Farbschichten und zum jeweiligen Untergrund ausreichend hoch. Es werden in der Praxis durchaus Schälhaftungswerte zwischen den Farbschichten erreicht, die 20 - 40 N/25mm, gemessen nach Norm DIN EN 1939 erreichen können. Zum Beispiel durch Alterungsprozesse, äussere Einwirkung, ungenügende Verarbeitung oder ungeeignete Aufbauten kann es sein, dass die Haftung zwischen den einzelnen Schichten oder zum jeweiligen Untergrund zu schwach sind, um eine weitere Farbschicht über die zu erwartende Einsatzdauer tragen zu können. Hier spricht man von schwach bzw. instabil haftenden Schichten. Diese schwachen Schichten können bei einer Schälbeanspruchung, angelehnt an die Norm DIN EN 1939 (gleicher normgerechter Messaufbau aber als Substrat keine Edelstahloberfläche sondern eine weitere Farbschicht auf einer Edelstahloberfläche), oftmals Schälhaftungswerte von weniger als 5 N/25mm (teilweise nur um 1 - 3 N/25mm) zwischen Farbschichten auftreten. Erfindungsgemäß sollen bevorzugt noch Farbschichten mit entsprechend bestimmten Schälhaftungswerten von bis zu 10 N/25 mm vor dem Aufbringen neue Farb- oder Lackschichten entfernt werden können. Dazu sollte der erfindungsgemäße Farbentferner bevorzugt auf den jeweiligen, zu entfernenden Farb- oder Lackschichten Schälhaftungswerte von etwa 15 N/25mm bis bevorzugt etwa 20 N/25mm oder im Bereich von besonders bevorzugt 10 bis 20 N/25 mm aufweisen, gemessen wie erwähnt in Anlehnung an die Norm DIN EN 1939. Es ist dem Fachmann allerdings allgemein bekannt, dass die Haftungseigenschaften von einer Haftkleberschicht sich von Untergrund zu Untergrund unterscheiden können. Ein guter Ausgangspunkt für die Auswahl von geeigneten Haftklebstoffen können Schälhaftungswerte nach Norm DIN EN 1939 im Bereich von etwa 20 bis 40 N/25 mm dienen.

Die Schichtdicke der Haftkleberschicht kann bevorzugt im Bereich 10 - 600 µm liegen, besonders bevorzugt im Bereich 30 - 400 µm am bevorzugtesten im Bereich 50 - 200 µm.

Für eine zweckmässige, vollflächige Applikation des Farbentfemers ist die Breite des Farbentferners von Bedeutung, diese kann in dem Bereich 2 mm bis 1500 mm liegen. Für die vollflächige Bedeckung von Wänden und Decken liegt die Breite im einem Bereich von 50 mm bis 1300 mm, bevorzugt in einem Bereich von 100 mm bis 800 mm, und bevorzugter in einem Bereich von 150 mm bis 600 mm liegt, wobei ihre Breite bei Verwendung für Treppen, Türen, Kanten, Ecken, Randabschlüsse, etc. bevorzugt in einem Bereich von 20 mm bis 400 mm liegt, insbesondere bevorzugt in einem Bereich von 50 mm bis 300 mm liegt, bei Verwendung für Profile, Strukturen, Formen besonders bevorzugt in einem Bereich von 2 mm bis 80 mm liegt, insbesondere bevorzugt in einem Bereich von 5 mm bis 50 mm liegt.

Der erfindungsgemäße Farbentferner kann als Platte oder Bahn ausgeführt sein, als Bahn bevorzugt als Rolle aufgerollt.

Zweckmässig ist sowohl eine Ausführungsform bei welcher die Haftkleberschicht nach Aussen gewickelt ist als auch eine Ausführungsform bei welcher die Haftkleberbeschichtung nach Innen gewickelt ist. Besonders bevorzugt ist die Haftkleberschicht dabei offen, d.h. nicht mit einem zusätzlichen Belag bzw. einer Adeckschicht abgedeckt.

Erfindungsgemäß bevorzugt ist eine Ausführungsform des Farbentferners als Rolle bei welcher der Belag bzw. die Abdeckschicht Teil der Trägerschicht ist. Besonders bevorzugt ist der Belag bzw. die Abdeckschicht dabei als Teil der Trägerschicht in diese integriert und auf der entsprechenden Oberfläche davon angeordnet.

Der Farbentfember kann bevorzugt mit einer Klebschicht einseitig selbstklebend ausgerüstet sein.

Der Farbentfernen kann auch doppelseitig selbstklebend ausgerüstet sein, wobei auf der oberen und der unteren Oberfläche des Träger bzw. der Trägerschicht je eine eine Klebschicht als Haftkleberschicht aufgebracht ist.

Bei der doppelseitigen Ausführung kann auf einer Haftkleberschicht ein Belag bzw. eine Abdeckschicht aufgebracht, welche beidseitig mit einer haftungsmindemden Schicht ausgerüstet ist.

Bevorzugt kann der erfindungsgemäße Farbentferner in Plattenform mit doppelseitiger Haftklbebebeschichtung und je einer Abdeckschicht vorliegen, oder in Plattenform mit einseitiger Haftkleberbeschichtung mit einer Abdeckschicht.

Der erfindungsgemäße, selbstklebende Farbentferner wird wie folgt erfindungsgemäß angewandt:
Der Farbentferner wird mit der ersten Klebschicht auf der zu entfernenden Farb- oder Lackschicht blasenfrei aufgebracht, bevorzugt blasenfrei angerieben oder angerollt und nach einer Einwirkzeit von bevorzugt 10 - 15 Minuten abgeschält. Dabei werden die schwach bzw. instabil haftenden Farb- und Lackschichten mit abgezogen, welche zu schwach am Untergrund haften. Diese haften dann an dem Farbentferner und diese können zusammen mit dem erfindungsgemäßen Farbentferner fachgerecht entsorgt werden. Die Entsorgung kann in der Regel mit dem Hausmüll erfolgen.

Wenn giftige, schwermetallhaltige Farb- oder Lackschichten entfernt werden, so müssen diese als Sondermüll entsorgt werden.

Durch die erfindungsgemäße Verwendung des Farbentferners wird das Sammeln der Abfälle bedeutend leichter und einfacher. Der Untergrund wird durch diese Methode nicht beschädigt.

Falls noch Farb- oder Lackschichten auf dem Untergrund verbleiben, so können diese bevorzugt durch lokal dort begrenzte Wiederholung des oben beschriebenen Vorgehens entfernt werden.

Der Untergrund wird durch dieses Verfahren nicht beschädigt und es kann oftmals direkt mit den Aufbau neuer Farb- oder Lackschichten fortgefahren werden.

Die grossflächige Anwendung kann erfindungsgemäß bevorzugt wie folgt vorgenommen werden:
Am Anfang des bevorzugt in Rollenform bahnförmig ausgebildeten Farbentferners wird durch Umschlagen der Farbentfernerbahn, jeweils eine Schlaufe über die ganze Rollenbreite gebildet, sodass Haftkleberschicht auf Haftkleberschicht zu liegen kommt.

Der Farbentferner wird dann so auf der zu entfernenden Farb- oder Lackschichtfläche angebracht bzw. aufgebracht, dass der Beginn der offenen Haftkleberschicht bündig / deckungsgleich mit der Grenze der zu entfernenden Farb- oder Lackschichtfläche liegt. Ein kleines Stück des Farbentferners wird von der Rolle abgerollt und im Weiteren durch weiteres Abrollen auf den Untergrund bzw. auf die Farb- oder Lackoberfläche blasenfrei aufgebracht, insbesondere blasenfrei angerollt bzw. angerieben. Eventuell noch vorhandene Blasen können durch Einstechen und nochmaliges Anreiben entfernt werden. Flächig können gegebenenfalls weitere Stücke abgerollt und blasenfrei angerieben bzw. angerollt werden. Nach Belegung der zu entfernenden Fläche wird der Farbentferner bündig mit der zu entfernenden Farb- oder Lackschichtfläche zugeschnitten, bzw. von der Rolle abgeschnitten. Zur vollflächigen Anwendung kann der Farbentferner so Bahn für Bahn, mit geringer Überlappung der Farbentfemerbahn, angebracht werden. Die Einwirkzeit des so aufgebrachten Farbentferners beträgt bevorzugt 10 - 15 min. Der Farbentferner wird dann bevorzugt in idealer Weise in einem 90° Winkel ruckartig abgezogen. Dabei wird bevorzugt beginnend mit der zuletzt aufgebrachten Farbentfemerbahn, die Schlaufe der Farbentfernerbahn mit beiden Händen gefasst und in einem 90° - 120° Winkel zum Untergrund mit einem Ruck angerissen, wodurch die schwach haftende Farb- oder Lackschicht mit vom Untergrund abgelöst wird. Dann wird die Farbentfernerbahn zusammen mit der Farb- oder Lackschicht Stück um Stück in einem 90° - 120° Winkel zum Untergrund ruckartig und vollständig abgezogen. Mit den folgenden Farbentfemerbahnen wird gleich verfahren. Die abgelösten Farbentfemerbahnen werden sogleich zusammengerollt oder zusammengefaltet und aufgestapelt, was Platz und Entsorgungsvolumen spart. Dann kann die fachgerechte Entsorgung erfolgen.

Die kleinflächige Anwendung kann erfindungsgemäß bevorzugt wie folgt vorgenommen werden:
Ein Stück des Farbentferners wird grob gemäß der zu entfernenden Farbfläche zugeschnitten. Es wird bevorzugt eine Schlaufe gebildet, das Farbentfernerstück aufgebracht und blasenfrei angerieben. Eventuelle Blasen werden eingestochen und nochmals angerieben. Die Einwirkzeit des so aufgebrachten Farbentferners beträgt bevorzugt 10 - 15 min. Der Farbentferner wird dann bevorzugt in idealer Weise in einem 90° Winkel ruckartig abgezogen. Dabei wird der Farbentferner zusammen mit der Farb- oder Lackschicht in einem 90° - 120° Winkel zum Untergrund ruckartig und vollständig abgezogen. Anschließend kann die fachgerechte Entsorgung erfolgen.

### Kurzbeschreibung der beigefügten Zeichnungen

Es zeigen:

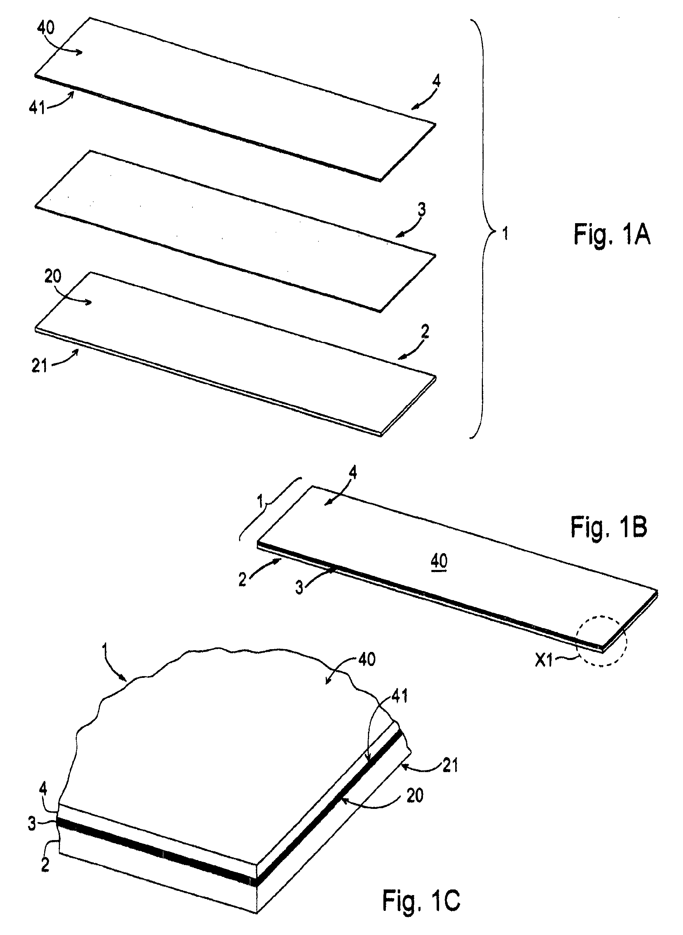

- Figur 1A -: Den erfindungsgemässen Farbentferner mit Träger, Klebschicht und Belag, als Explosivdarstellung;
- Figur 1B -: den Farbentferner gemäss Figur 1A als verwendbares Fertigmaterial;
- Figur 1C -: das vergrösserte Detail X1 aus Figur 1B;

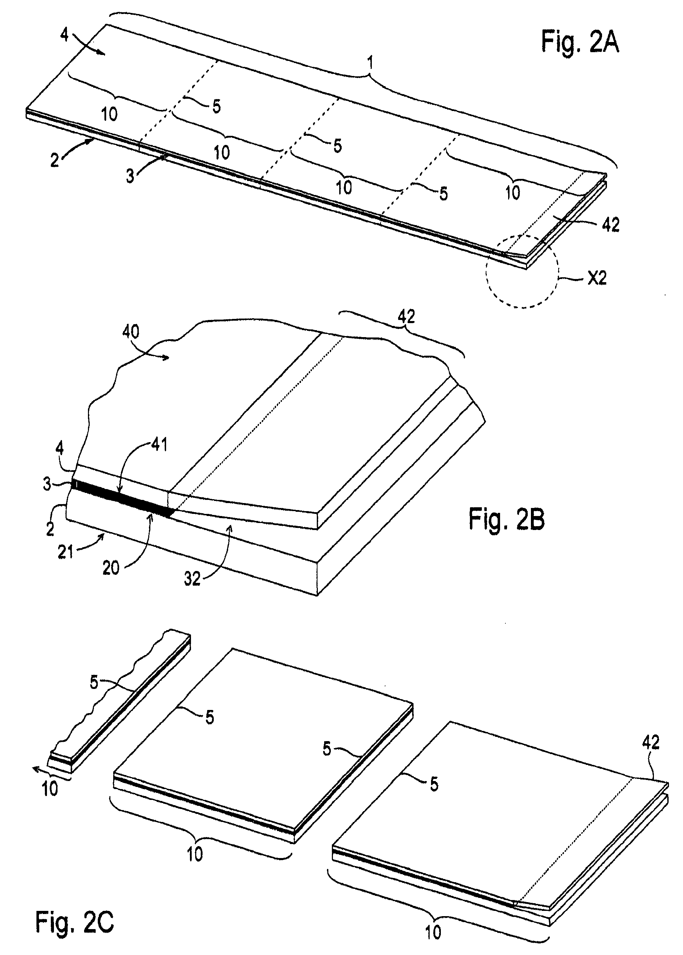

- Figur 2A -: eine Materialbahn des Farbentferners gemäss Figur 1A mit Perforationen zum Abtrennen von Teilstücken und Lösebereich an der Abdeckung;
- Figur 2B -: das vergrösserte Detail X2 aus Figur 2A;
- Figur 2C -: von der Materialbahn gemäss Figur 2A abgetrennte erste Teilstücke;

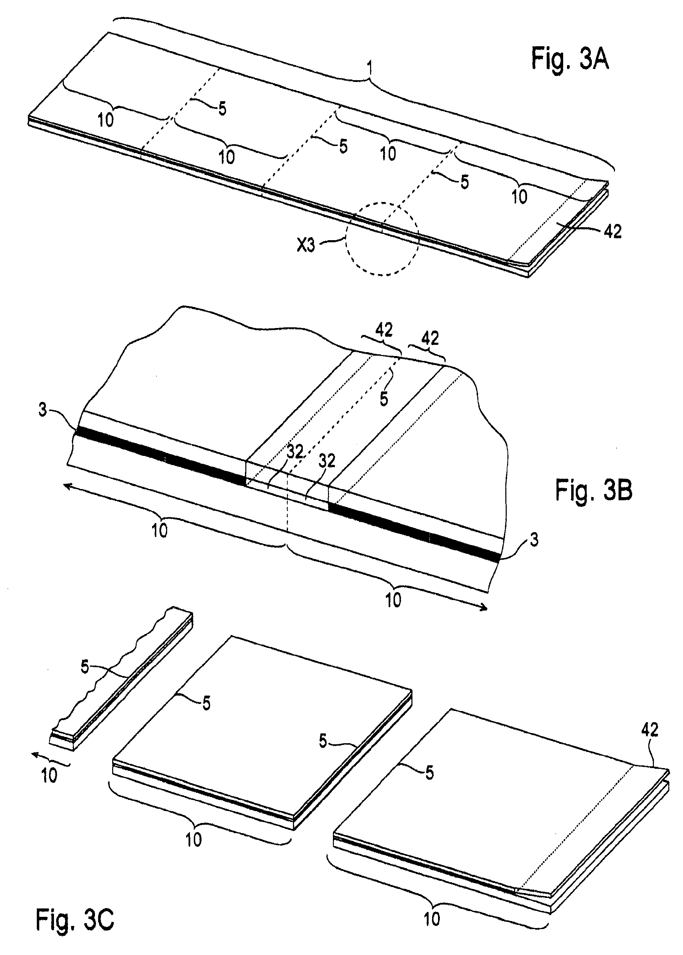

- Figur 3A -: eine Materialbahn des Farbentferners gemäss Figur 1A mit Perforationen zum Abtrennen von Teilstücken und Lösebereichen am Belag, mit jeweils an der Perforation ausgesparter Klebschicht;
- Figur 3B -: das vergrösserte Detail X3 aus Figur 3A;
- Figur 3C -: von der Materialbahn gemäss Figur 3A abgetrennte erste Teilstücke; und

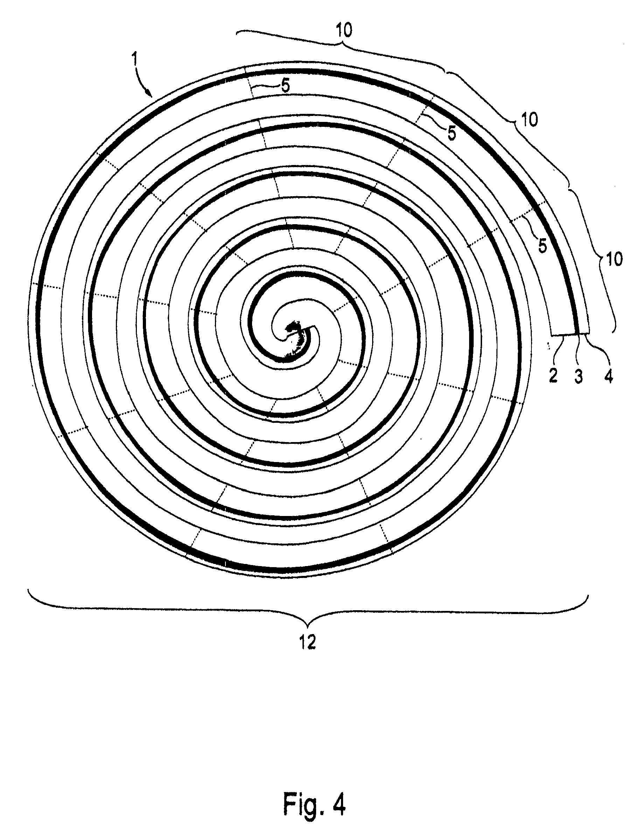

- Figur 4 -: eine Materialbahn des Farbentferners gemäss Figur 1A mit Perforationen zum Abtrennen von Teilstücken in Rollenform;
- Figur 5: Eine Materialbahn des Farbentferners in Rollenform ohne separaten Belag mit im Träger integrierten Belag bzw. Abdeckschicht.

Mit Bezug auf die beiliegenden Zeichnungen erfolgt nachstehend die detaillierte Beschreibung eines Ausführungsbeispiels zum erfindungsgemässen Farbentferner mit bevorzugten Beschaffenheitsdetails.

Für die gesamte weitere Beschreibung gilt folgende Festlegung. Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden oder nachfolgenden Figurenbeschreibungen Bezug genommen. Im Interesse der Übersichtlichkeit wird auf die wiederholte Bezeichnung von Bauteilen in weiteren Figuren zumeist verzichtet, sofern zeichnerisch eindeutig erkennbar ist, dass es sich um "wiederkehrende" Bauteile handelt.

### Figuren 1A bis 1C

Der Farbentferner 1 zur mechanischen Beseitigung von Farbschichten oder instabil haftenden Farbstellen von Oberflächen besteht zunächst aus einem flächigen Träger 2 mit einer Trägeroberseite 20 und einer Trägerunterseite 21. Weiterer Bestandteil des Farbentferners 1 ist zumindest eine auf der Trägeroberseite 20 aufgebrachte erste Klebschicht 3, welche zum Anhaften der von den Oberflächen zu beseitigenden Farbschichten oder instabil haftenden Farbstellen bestimmt ist. Schliesslich umfasst der Farbentferner 1 einen ersten flächigen Belag 4 mit einer Belagsfrontseite 40 und einer Belagsrückseite 41, wobei letztere zum lösbaren Überdecken der zumindest einen ersten Klebschicht 3 vor einer ersten Anwendung des Farbentferners 1 bestimmt ist. Die drei Bestandteile sind sandwichartig aufeinander geschichtet und ergeben hier die Gestalt einer plattenförmigen Materialbahn.

Der Träger 2 besteht aus einem flexiblen, im Prinzip reissfesten Material, insbesondere festem Papier, Folie, Vlies oder Schaum. Für den Belag 4 eignet sich ein ebenfalls flexibles Material, insbesondere Papier, Folie, Vlies oder Schaum. Zwecks Lösbarkeit von einer nur dezenten Anhaftung der Belagsrückseite 41 des Belags 4 an der Klebschicht 3 ist die Belagsrückseite 41 mit einer Trennbeschichtung versehen. Die Klebschicht 3 und optional auch der Träger 2 lassen sich vorteilhaft hinsichtlich Klebeigenschaften und Reissfestigkeit an verschiedene Typen von zu beseitigenden Farbschichten oder instabil haftenden Farbstellen anpassen. Durch eine partiell aushärtende Behandlung der Unterseite der Klebschicht 3 bei vorzugsweiser Beibehaltung von deren Flexibilität, aber Beseitigung der Klebeigenschaft, kann die Funktion des Trägers 2 von dieser Klebschichtunterseite erfüllt werden.

Alternativ, was hier nicht dargestellt ist, kann auf der Trägerunterseite 21 eine zweite Klebschicht 3 aufgebracht sein, welche vor einer zweiten Anwendung des Farbentferners 1 von der Belagsrückseite 41 eines lösbaren zweiten flächigen Belags 4 überdeckt ist. Für den Gebrauch des Farbentferners 1 in der Praxis wäre ein Vorrat an Farbentfernern 1 in Gestalt einer Vielzahl von im Paket übereinander gepackten Materialbahnen vorteilhaft.

Die Belagsfrontseite 40 ist zum Anbringen von Produkthinweisen nutzbar, insbesondere Hersteller bzw. Händler, Marken als Warenkennzeichen, Anwenderinstruktionen, Typ des Farbentferners 1 - d.h. Eignung für Arten von zu beseitigenden Farbschichten oder instabil haftenden Farbstellen -, Lagerhinweise und empfohlener Aufbrauchfrist.

### Figuren 2A bis 2C

Die Ausführungsform des Farbentferners 1 ist nun dahingehend modifiziert, dass:
- die Materialbahn aus einer Mehrzahl von zusammenhängenden Teilstücken 10 besteht;
- zwischen den Teilstücken 10 jeweils eine Markierung oder eine Perforation 5 zum erleichterten Abteilen von Teilstücken 10 vorhanden ist;
- zumindest am Beginn der Materialbahn der Belag 4 einen Lösebereich 42, hier als Randstreifen ausgebildet, zum erleichterten Abziehen des Belags 4 von der Klebschicht 3 aufweist; und
- unterhalb des Lösebereichs 42 des Belags 4 die Klebschicht 3 eine Aussparung 32 hat.

Alternativ, in dieser Figurengruppe nicht gezeigt, kann der Lösebereich 42 des Belags 4 auch sich nur über ein Eckareal erstrecken.

### Figuren 3A bis 3C

Eine nächste Ausführungsform des Farbentferners 1 unterscheidet sich von der vorherigen Figurengruppe nur dadurch, dass:
- ausser am Beginn des ersten Teilstücks 10, auch angrenzend an jede Markierung oder Perforation 5, ein Lösebereich 42 am vorherigen Teilstück 10 sowie am anschliessenden Teilstück 10 vorhanden ist; und
- unterhalb jedes Lösebereichs 42 des Belags 4 die Klebschicht 3 eine jeweilige Aussparung 32 hat.

### Figur 4

Diese Figur illustriert den Farbentferner 1 als Sandwichanordnung aus Träger 2, Klebschicht 3 und Belag 4 mit einer Vielzahl durch Markierung oder Perforation 5 voneinander abgeteilter, aber zusammenhängender Teilstücke 10 in Gestalt einer Materialrolle 12 als Vorrat an Farbentfernern 1 für die Anwendung in der Praxis. Auch bei einer Materialrolle 12 kann man zumindest an deren Anfang einen Lösebereich 42 mit darunter befindlicher Aussparung 32 an der Klebschicht 3 vorsehen.

Wie bei der vorangehenden Figurengruppe lässt sich auch bei einer Materialrolle 12:
- angrenzend an jede Markierung oder Perforation 5 ein Lösebereich 42 am vorherigen Teilstück 10 sowie am anschliessenden Teilstück 10 ausbilden; und
- dem zugeordnet unterhalb jedes Lösebereichs 42 des Belags 4 an der Klebschicht 3 eine jeweilige Aussparung 32 vorsehen.

### Figur 5

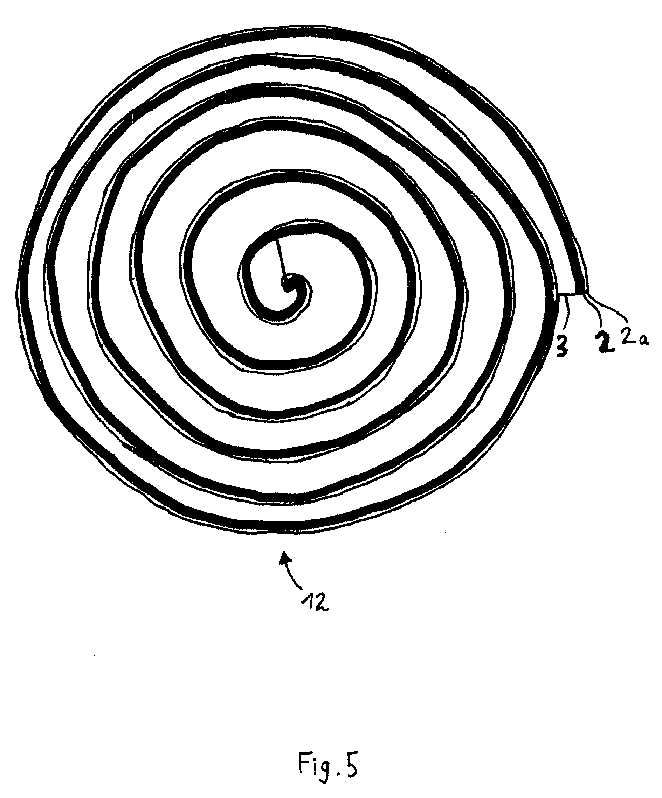

Diese Figur illustriert den Farbentferner 1 als Sandwichanordnung aus Träger 2 und Klebschicht 3 ohne separaten Belag 4 gemäß einer weiteren bevorzugten Ausführungsform der Erfindung. Der Farbentferner 1 liegt in Form einer Materialrolle 12 vor. Gemäß der Darstellung der Figur 5 befindet sich der Träger 2 außen, d.h. an der Außenseite der Rolle, und die Klebschicht 3 innen, d-h. an der Innenseite der Rolle. Gemäß der Darstellung der Figur 5 ist mit dem Träger 2 ein integrierter Belag 2a bzw. eine integrierte Abdeckschicht 2a an der Trägerunterseite 21 dort integriert vorgesehen.

Bei der Anwendung des Farbentferners 1 in der Praxis kann beispielsweise von der Materialbahn oder einer Materialrolle 12 ein Teilstück 10 entnommen werden. Die Grösse des Teilstücks 10 ist entweder durch die vorhandene Markierung oder Perforation 5 vorgegeben oder muss, entsprechend dem jeweiligen Grössenerfordernis, von der Materialbahn oder einer Materialrolle 12 zugeschnitten werden. Anschliessend wird (sofern vorhanden) der separate Belag 4 von der Klebschicht 3 abgezogen und nun die Klebschicht 3 auf die zu behandelnde Oberfläche aufgedrückt. Hierbei bleiben die zu beseitigende Farbschicht oder die instabil haftenden Farbstellen an der Klebschicht 3 intensiv haften. Schliesslich reisst man mit dem Träger 2 alle an der Klebschicht 3 anhaftenden Farbpartikel von der betreffenden Oberfläche ab.

## Patentansprüche

1. Farbentferner (1) zur mechanischen Beseitigung von Farbschichten oder instabil haftenden Farbstellen von Oberflächen, **dadurch gekennzeichnet, dass** dieser besteht aus:
a) einem flächigen Träger (2) mit einer Trägeroberseite (20) und einer Trägerunterseite (21);
b) zumindest einer auf der Trägeroberseite (20) aufgebrachten ersten Klebschicht (3), bestimmt zum Anhaften der von den Oberflächen zu beseitigenden Farbschichten oder instabil haftenden Farbstellen; und
c) einem ersten flächigen Belag (4) mit einer Belagsfrontseite (40) und einer Belagsrückseite (41), wobei letztere zum lösbaren Überdecken der zumindest einen ersten Klebschicht (3) vor einer ersten Anwendung des Farbentferners (1) bestimmt ist.

2. Farbentferner (1) zur mechanischen Beseitigung von Farbschichten oder instabil haftenden Farbstellen von Oberflächen, **dadurch gekennzeichnet, dass** dieser besteht aus:
a) einem flächigen Träger (2) mit einer Trägeroberseite (20) und einer Trägerunterseite (21); und
b) zumindest einer auf der Trägeroberseite (20) aufgebrachten ersten Klebschicht (3), bestimmt zum Anhaften der von den Oberflächen zu beseitigenden Farbschichten oder instabil haftenden Farbstellen.

3. Farbentferner (1) nach Anspruch 2, **dadurch gekennzeichnet, dass** der Träger (2) auf der Trägerunterseite (21) einen mit dem Träger (2) integrierten Belag (2a) als Bestandteil des Trägers (2) aufweist.

4. Farbentferner (1) nach Anspruch 1, **dadurch gekennzeichnet, dass** auf der Trägerunterseite (21) eine zweite Klebschicht (3) aufgebracht ist, welche vor einer zweiten Anwendung des Farbentferners (1) von der Belagsrückseite (41) eines lösbaren zweiten flächigen Belags (4) überdeckt ist.

5. Farbentferner (1) nach einem der Ansprüche 1 bis 4, **dadurch gekennzeichnet, dass** zwecks Lösbarkeit von einer nur dezenten Anhaftung der Belagsrückseiten (41) des Belags (4) an den Klebschichten (3), die Belagsrückseiten (41) mit einer Trennbeschichtung versehen sind.

6. Farbentferner (1) nach einem der Anspruch 1, **dadurch gekennzeichnet, dass** auf der Trägerunterseite (21) eine zweite Klebschicht (3) aufgebracht ist, wobei zwecks Lösbarkeit von einer nur dezenten Anhaftung der Belagsrückseiten (41) und der Belagsfrontseiten (40) des ersten flächigen Belags (4) an den Klebschichten (3), die Belagsrückseiten (41) und die Belagsfrontseiten (40) mit einer Trennbeschichtung versehen sind.

7. Farbentferner (1) nach einem der Ansprüche 1 bis 6, **dadurch gekennzeichnet, dass** der Träger (2) aus einem flexiblen, im Prinzip reissfesten Material besteht, insbesondere festes Papier, Folie, Vlies oder Schaum.

8. Farbentferner (1) nach einem der Ansprüche 1 oder 7, **dadurch gekennzeichnet, dass** der Belag (4) aus einem flexiblen Material besteht, insbesondere Papier, Folie, Vlies oder Schaum.

9. Farbentferner (1) nach einem der Ansprüche 1 bis 8, **dadurch gekennzeichnet, dass** der Farbentferner (1) als Sandwichanordnung die Gestalt einer plattenförmigen Materialbahn oder einer Materialrolle (12) hat.

10. Farbentferner (1) nach Anspruch 9, **dadurch gekennzeichnet, dass** die Materialbahn oder Materialrolle (12) aus einer Mehrzahl von zusammenhängenden Teilstücken (10) besteht.

11. Farbentferner (1) nach Anspruch 10, **dadurch gekennzeichnet, dass** zwischen den Teilstücken (10) jeweils eine Markierung oder eine Perforation (5) zum erleichterten Abteilen von Teilstücken (10) vorhanden ist.

12. Farbentferner (1) nach einem der Ansprüche 9 bis 11, **dadurch gekennzeichnet, dass** zumindest am Beginn der Materialbahn oder Materialrolle (12) der Belag (4) einen Lösebereich (42) zum erleichterten Abziehen des Belags (4) von der Klebschicht (3) aufweist.

13. Farbentferner (1) nach Anspruch 12, **dadurch gekennzeichnet, dass**
a) unterhalb des Lösebereichs (42) des Belags (4) die Klebschicht (3) eine Aussparung (32) hat; und
b) der Lösebereich (42) z.B. als Randstreifen oder Eckareal beschaffen ist.

14. Farbentferner (1) nach einem der Ansprüche 12 oder 13, **dadurch gekennzeichnet, dass** der Belag (4) an jedem Teilstück (10) zumindest einen Lösebereich (42) mit darunter befindlicher Aussparung (32) an der Klebschicht (3) aufweist.

15. Farbentferner (1) nach einem der Ansprüche 1 bis 14, **dadurch gekennzeichnet, dass** auf der Belagsfrontseite (40) Produkthinweise angebracht sind.

16. Farbentferner (1) nach einem der Ansprüche 1 bis 15, **dadurch gekennzeichnet, dass** die Klebschicht (3) und optional auch der Träger (2) verschiedenen Typen von zu beseitigenden Farbschichten oder instabil haftenden Farbstellen angepasst sind.

17. Farbentferner (1) nach einem der Ansprüche 1 bis 6 und 8 bis 16, **dadurch gekennzeichnet, dass** der Träger (2) aus dem Material an einer Unterseite der Klebschicht (3) durch partiell aushärtende Behandlung bei vorzugsweiser Beibehaltung von deren Flexibilität, aber zumindest weitgehender Beseitigung der Klebeigenschaft, gebildet ist.

18. Verfahren zur mechanischen Beseitigung von Farbschichten oder instabil haftenden Farbstellen von Oberflächen, **dadurch gekennzeichnet, dass** dieses die folgenden Schritte aufweist:
a) Bereitstellen eines Farbentferners mit einem flächigen Träger (2) mit einer Trägeroberseite (20) und einer Trägerunterseite (21) und zumindest einer auf der Trägeroberseite (20) aufgebrachten ersten Klebschicht (3), bestimmt zum Anhaften der von den Oberflächen zu beseitigenden Farbschichten oder instabil haftenden Farbstellen;
b) Aufbringen des Farbentferners mit der ersten Klebschicht blasenfrei auf der zu entfernenden Farbschicht;
c) Einwirken des aufgebrachten Farbentferners; und
d) Abgeschälen des Farbentferners, wobei schwach haftenden Farbschichten mit abgezogen werden.

19. Verfahren zur mechanischen Beseitigung von Farbschichten oder instabil haftenden Farbstellen von Oberflächen nach Anspruch 18, **dadurch gekennzeichnet, dass** ein Farbentferner gemäß zumindest einem der Ansprüche 1 bis 17 bereitgestellt wird.
